## Europäisches Patentamt
## European Patent Office
## Office européen des brevets

(11) Numéro de publication: **0 013 210**
**B1**

(12) **FASCICULE DE BREVET EUROPEEN**

(45) Date de publication du fascicule du brevet: **23.06.82**

(51) Int. Cl.³: **G 21 C 17/10,** G 21 C 13/00

(21) Numéro de dépôt: **79401004.1**

(22) Date de dépôt: **11.12.79**

(54) Installation de réacteur nucléaire avec aménagement d'instrumentation de mesure de flux neutronique.

(30) Priorité: **15.12.78 FR 7835319**

(43) Date de publication de la demande:
**09.07.80 Bulletin 80/14**

(45) Mention de la délivrance du brevet:
**23.06.82 Bulletin 82/25**

(84) Etats contractants désignés:
**BE DE GB IT SE**

(56) Documents cités:
**FR - A - 2 081 077**
**FR - A - 2 094 195**
**FR - A - 2 290 005**
**FR - A - 2 343 313**

(73) Titulaire: **Framatome**
**Tour Fiat 1 place de la Coupole**
**F-92400 Courbevoie (FR)**

(72) Inventeur: **Magnin, Raymond**
**77 avenue Félix Faure**
**F-92000 Nanterre (FR)**
Inventeur: **Gebelin, Bernard**
**20 rue G. Bussière**
**F-69100 Villeurbanne (FR)**

(74) Mandataire: **Dupuy, Louis et al,**
**CREUSOT-LOIRE 15 rue Pasquier**
**F-75383 Paris Cedex 8 (FR)**

Courier Press, Leamington Spa, England.

## Installation de réacteur nucléaire avec aménagement d'instrumentation de mesure de flux neutronique

L'invention se rapporte à une installation de réacteur nuclaire et plus spécialement de réacteur à eau pressurisée.

On sait que les réacteurs nucléaires, notamment à eau pressurisée, comportent un coeur placé dans une cuve sous pression à l'intérieur de laquelle circule l'eau primaire de refroidissement de coeur. Cette cuve, normalement métallique est placée dans une enceinte de protection en béton formant un puits. La cuve peut être ouverte à sa partie supérieure et, à cet effet, elle est munie d'un couvercle amovible qui est fixé sur une bride définissant un plan de joint horizontal à la partie supérieure de la cuve. Au-dessus de ce plan de joint est placée une piscine de façon à permettre de noyer la cuve sous une quantité suffisante d'eau lorsqu'on désire intervenir sur la coeur.

D'autre part, pour contrôler le fonctionnement du réacteur, on utilise habituellement une instrumentation de mesure de flux neutronique que se compose de détecteurs susceptibles de pénétrer à l'intérieur du coeur et d'être déplacés en différents points de la charge de combustible pendant le fonctionnement du réacteur. Ces détacteurs, qui sont reliés par des câbles souples à un appareillage de manoeuvre pour effectuer les mesures de flux, placé dans une salle située à l'extérieur du puits de protection, se déplacent généralement à l'intérieur d'une pluralité de tubes guides pénétrant dans le coeur.

Ces tubes guides, du type "doigts de gant" comportent une partie antérieure d'axe vertical fermée à son extrémité qui pénètre verticalement à l'intérieur du coeur et qui est reliée par une courbe à une partie postérieure traversant horizontalement la première enceinte formant la paroi du puits qui, de ce fait, comporte à sa partie inférieure un espace libre au-dessous de la cuve permettant la courbure des tubes-guides.

Dans les installations classiques, la salle des équipements de mesure est placée à un niveau au moins aussi élevé quie le dessus du coeur. De ce fait, les tubes-guides, après être passés horizontalement de l'autre côté de l'enceinte de protection, doivent remonter verticalement dans un puits parallèle formant siphon jusqu'à des joints placés à l'entrée de la salle des équipements de mesure.

Le tube-guide fermé à son extrémité constitue ainsi une enveloppe étanche séparant le fluide primaire de refroidissement à haute pression de l'air atmosphérique contenu à l'intérieur de tube et dans la salle de mesure avec laquelle il est en communication.

D'autre part, lorsque, à l'arrêt, on ouvre la cuve, il est généralement nécessaire de retirer les tubes-guides de la cuve. A cet effet, on fait coulisser les tubes le long de leur axe jusqu'à ce que leur extrémité se trouve à la partie inférieure de la cuve. Les joints qui sont placés à l'entrée de la salle des équipements de mesure permettant ce coulissement, mais, lorsque la cuve est ouverte, le fluide primaire n'est pas sous pression et les joints ne doivent donc supporter que la pression résultant de la différence de hauteur entre le niveau de l'eau dans la cuve et le niveau du joint.

Cette disposition classique présente cependant l'inconvénient d'obliger le constructeur à placer la salle des équipements de mesure à un niveau assez encombré et d'autre part à allonger toute l'instrumentation pour atteindre ce niveau.

Il a déjà été proposé dans les brevets Français 2081077 et 2290005 de placer la salle des équipements de mesure au niveau inférieur de puits dans lequel est placée la cuve. Les tubes-guides sont alors raccourcis puisqu'ils ne comportent plus que la partie antérieure verticale à l'intérieur de la cuve, la partie courbe de raccordement et la partie horizontale postérieure traversant la paroi de l'enceinte de protection. Les organes de jonction étanches sont placés immédiatement derrière cette paroi. Bien entendu, ces organes de jonction doivent être munis de joints permettant le coulissement du tube tout en maintenant l'étanchéité suffisante; de tels joints sont décrits dans le brevet dé jà cité.

D'autre part, l'ensemble de l'installation est placé à l'intérieur d'une seconde enceinte de protection appelée le bâtiment du réacteur et dont le font est constitué par un radier de béton assurant la fondation et la protection de la nappe phréatique en cas de fuite.

Pour ne pas élever exagérèment la hauteur de bâtiment du réacteur, on cherche à placer la cuve le plus bas possible. Cependant, comme on l'a indiqué, le puits de noyage de la cuve doit comporter un espace libre audessous de celle-ci pour permettre la courbure des tubes-guides. On a déjà réalisé des installations dans lesquelles ces espace est ménagé dans une fosse placée sous le niveau général du radier. Cependant, pour des raisons de sécurité, les utilisateurs exigent généralement maintenant la réalisation d'un radier plat. Ceci oblige à surélever la cuve de la hauteur correspondant à l'espace nécessaire pour le passage des tubes-guides, le plancher de las salle de mesure étant au niveau supérieur de radier dans la disposition selon les brevets français 2.081.077 et 2.290.005.

L'invention a pour but d'abaisser autant que possible le niveau de la cuve, tout abaissement, même relativement faible, ayant des conséquences importantes sur le coût de l'installation et même sur la sécurité, une hauteur élevée pénalisant notamment la tenue aux sollicitations sismiques des matériels et structures de l'installation.

Selon l'invention, la partie inférieure du puits limité par la première enceinte et au moins la partie de la salle des équipements de mesure dans laquelle débouchent les tubes-guides sont placées dans une cuvette ménagée dans la partie centrale du radier, ladite cuvette ayant une profondeur inférieure à l'épaisseur de radier et un diamètre supérieur au diamètre extérieur de la première enceinte de protection.

On avait pris l'habitude en effet de réaliser un radier d'épaisseur uniforme. Cependant, on sait que, en particulier lorsqu'on utilise la technique de béton precontraint, la présente de béton inactif, c'est-à-dire non comprimé, est inutile et même parfois nuisible. Or, dans un radier de grande dimension, la partie centrale ne doit pas obligatoirement avoir une épaisseur aussi importante que la périphérie. Il est donc possible de ménager dans la partie centrale du radier une cuvette dont la profondeur sera évidemment inférieure à l'épaisseur du radier mais qui permettra cependant d'abaisser la cuve et par conséquent l'ensemble de l'installation d'une hauteur non négligeable.

Le diamètre de cette cuvette sera supérieur au diamètre extérieur de la première enceinte de protection afin que la partie postérieure des tubes-guides débouche à l'intérieur de la cuvette, à un niveau plus bas que le dessus du radier. Le reste de la partie de la cuvette extérieure au puits pourra par example être rempli d'un béton de calage.

Cependant, les dimensions de la salle des équipements de mesure et l'enconbrement de l'instrumentation ne permettront généralement pas de placer tout le plancher de la salle de mesure au niveau le plus bas de la cuvette. C'est pourquoi, dans certaines formes d'exécution de l'invention, la salle des équipements de mesure aura un plancher à deux niveaux. La plus grande partie du plancher sur laquelle sont placés les appareils de manoeuvre pour effectuer les mesures, sera au niveau du dessus du radier. En revanche, le long de la première enceinte, le plancher comprendra une fosse correspondant à la partie de la cuvette extérieure au puits et dans laquelle déboucheront les tubes-guides.

De ce fait, les câbles de manoeuvre des détecteurs à l'intérieur des tubes guides devront, à la sortie de la partie postérieure de ceux-ci, être inflèchisvers le haut pour se retrouver au niveau des appareils de mesure. Ce changement de direction ne présente pas d'inconvénient étant donné que les câbles de manoeuvre sont obligatoirement assez flexibles.

Cependant, lorsque la partie antérieure des tubes-guides est retirée de coeur, la partie postérieure doit pouvoir avancer à l'intérieur de la salle des équipements de mesure d'une longueur correspondante. Généralement, la fosse dans laquelle débouchent les tubes-guides et dont la largeur dépend du diamètre que l'on a pu donner à la cuvette ne permet pas le retrait des tubes, on ménagera alors sous le plancher de la salle des équipements de mesure une pluralité de conduits cylindriques disposés chacun dans l'alignement de l'un des tubes-guides, la partie postérieure de chaque tube pouvant ainsi pénétrer dans le conduit correspondant lorsque l'on retire la partie antérieure de l'intérieur de coeur.

L'invention sera mieux comprise en se référant à un mode de réalisation particulier qui a été représenté par les dessins annexés.

La figure 1 représente l'ensemble de l'installation dans un bâtiment de réacteur perfectionné selon l'invention.

La figure 2 représente schématiquement la partie inférieure du puits du réacteur et la salle des équipements de mesure.

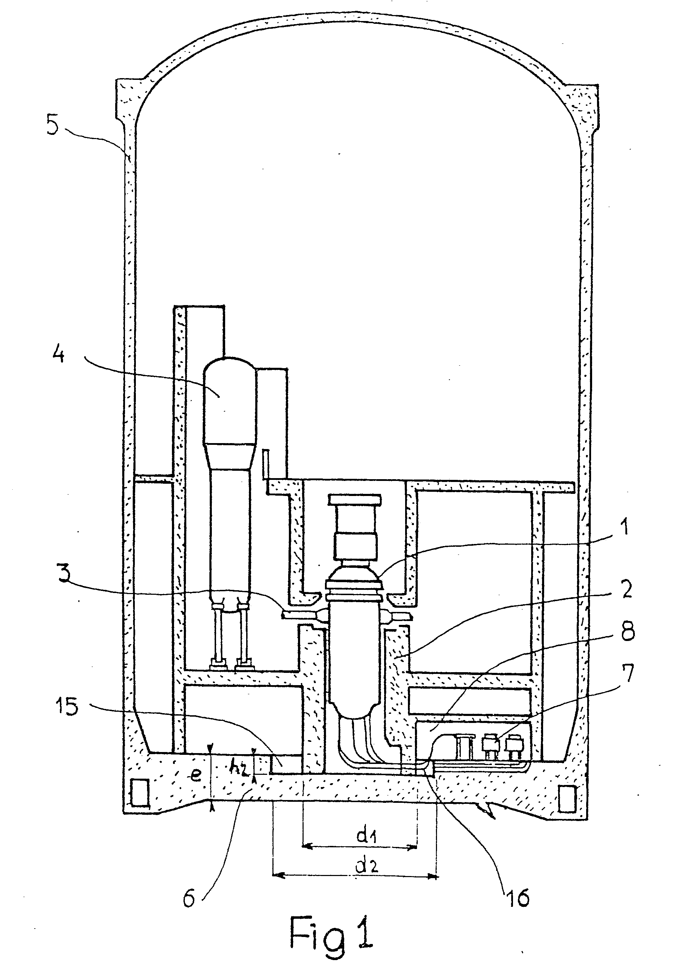

Sur la figure 1, on a représenté schématiquement la cuve 1 du réacteur placée à l'intérieur d'une première enceinte de protection 2 formant un puits dont la partie supérieure est munie d'orifices permettant le passage des conduits de liaison 3 avec les générateurs de vapeur 4. L'ensemble est placé à l'intérieur d'une seconde enceinte 5 dont le font 6 forme un radier de fondation. Sur le radier sont placés notamment des équipements de mesure 7 à l'intérieure d'une salle 8 qui, selon la disposition faisant l'objet du brevet FR—A—2081077, est placée au niveau inférieur de puits 2.

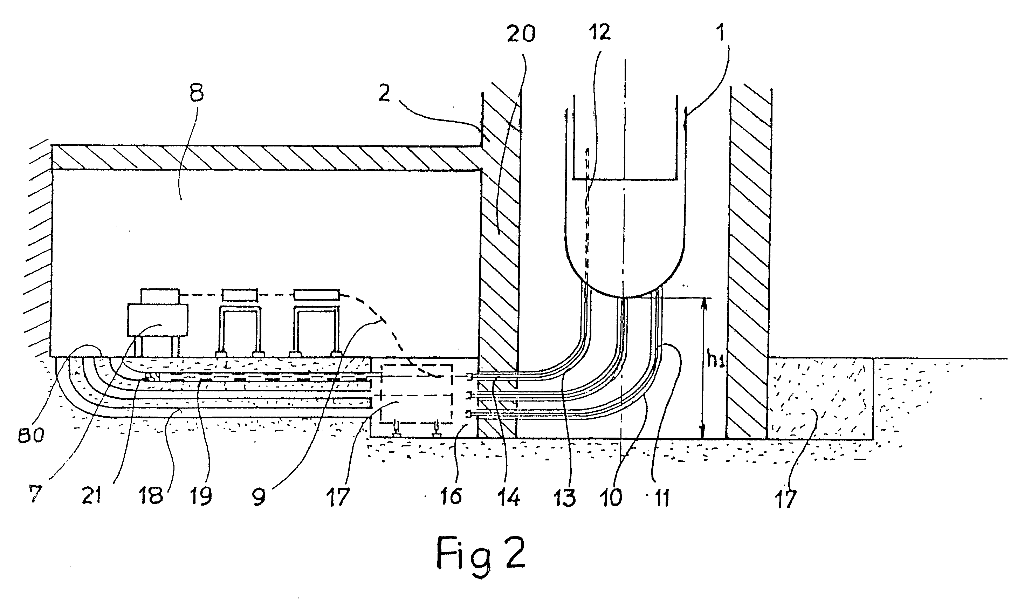

Comme on le voit sur la figure 2, les équipements de mesure 7 sont reliés à des détecteurs qui sont introduits dans la cuve 1 du réacteur au moyen de câbles 9. A cet effet, selon und disposition classique qui est décrite en détail par exemple dans le brevet FR—A—2081077, la salle des équipements de mesure est reliée à la cuve de réacteur 1 par des conduits fixes 10 qui traversent la partie inférieure 20 de la première enceinte de protection 2. Dans ces conduits fixes 10, coulissent des tubes-guides 11 du type "doigts de gant" qui comportent une partie antérieure 12 pénétrant verticalement dans le coeur, et reliée par une courbe 13 à une partie postérieure 14 débouchant horizontalement à l'intérieur de la salle des équipements de mesure. La partie antérieure 12 est fermée à son extrémité et la partie postérieure 14 est ouverte de façon à permettre l'introduction du câble 9 muni à son extrémité d'un détecteur.

Comme on l'a décrit dans le brevet FR—A—2081077, les conduits fixes 10 sont munis à leur extrémité débouchant dans la salle des équipements de mesure de joints qui assurent l'étanchéité en fonctionnement et à l'arrêt tout en permettant le coulissement des tubes-guides 11 à l'arrêt du réacteur.

On voit que, pour permettre de placer les conduits fixes 10 permettant l'introduction des tubes-guides, il est nécessaire de laisser une hauteur libre $h_1$ entre le fond du puits 2 et le fond de la cuve 1.

Comme on l'a représenté sur les figures, la partie inférieure du puits 2 est placée, selon l'invention, dans une cuvette 15 ménagée dans la partie centrale du radier 6. Cette cuvette a un diamètre $d_2$ supérieur au diamètre extérieur $d_1$

de la première enceinte 2 de telle sorte qu'elle est partiellement recouverte par la salle des équipements de mesure 8 et forme à l'intérieur de celle-ci une fosse 16. Le reste de la cuvette extérieur au puits 2 peut être rempli d'un béton de blocage 17 (figure 2) à moins que l'on ne juge utile d'y placer divers instruments ou appareillages.

Le diamètre d2 et la hauteur h2 de la cuvette dépendant évidemment de la hauteur du béton inactif dans lequel il est possible de ménager la cuvette sans inconvénient pour la résistance de radier. En fait, les dimensions de la cuvette dépendront surtout de la disposition que l'on peut adopter pour les armatures de précontrainte.

Cependant, on peut penser qu'il sera possible de donner à la cuvette une hauteur h2 supérieure au tiers de l'épaisseur de radier ce qui permet, comme on le voit sur les figures, d'abaisser la cuve et l'ensemble du bâtiment du réacteur de façon non négligeable.

Comme on le voit sur la figure 2, la partie de la cuvette 15 extérieure à l'enceinte 2 ne peut généralement pas correspondre à la totalité de la salle des équipements de mesure. C'est pourquoi celle-ci a un plancher à deux niveaux; es différents appareils sont placés sur un plancher 80 qui correspond an niveau du dessus du radier. Cependant le long de la paroi 2 du puits se trouve une fosse 16 dans laquelle débouchent les extrémités des conduits fixes 10 et les tlubes-guides 11. Les câbles 9 sortant des tubes-guides doivent donc être ramenés au niveau des matériels pour les manoeuvrer mais cette double courbure ne présente pas d'inconvénient en raison de la souplesse des câbles des manoeuvre.

Lorsque l'on a arrête le réacteur pur ouvrir la cuve, il est généralement nécessaire de retirer les tubes-guides ou du moins leur partie antérieure 12. Dans ce cas, on commence par retirer l'ensemble des câbles 9 quie pénétraient dans le réacteur. Il est alors possible de placer dans la fosse 16 une machine 17 de retrait des tubes-guides 11. Pour cette opération décrite en détail dans le brevet 70-07485, les joints placés au débouché des conduits fixes 10 sont débloqués mais maintenus assez serrés pour permettre le coulissement des tubes tout en assurant une étanchéité suffisante à l'eau contenue à l'intérieur de la cuve 1.

La machine 17 fait donc coulisser longitudinalement les tubes-guides jusqu'à ce que leur partie antérieure 12 soit retirée de la cuve, la partie postérieure 14 avançant dans la salle de mesure d'une longueur correspondante.

Comme la fosse 16 a une largeur généralement insuffisante pour permettre cette opération, on ménage dans le radier 6, au-dessous du plancher 80, une pluralité de conduits cylindriques 18 qui sont placés chacun dans l'alignement d'un tube-guide. De plus, à l'intérieur des conduits 18 sont placés de préférence des fourreaux 19 permettant le coulissement de tube-guide sans dommages et constitués par exemple de demi-coquilles de maintien.

Comme on l'a représenté sur la figure, les conduits 18 seront recourbés à leur extrémité de façon à déboucher à l'intérieur de la salle des équipements de mesure 8, ce qui permettra l'introduction initiale. En outre, il sera possible de placer à leur extrémité un élément mobile de butée 21 sur lequel pourra venir s'appuyer l'extrémité du tube-guide. On pourra ainsi encaisser l'effet de fond s'exerçant sur l'extrémité de la partie antérieure de tube 12, les fourreaux 19 évitant le flambage du tube.

Normalement la disposition des armatures de précontrainte permettra de placer facilement les conduits 18 à l'intérieur du radier. A titre d'exemple, pour les réacteurs actuellement réalisés, les conduits 18 pourront avoir une longueur de 8 m environ et un diamètre de 50 à 60 mm; Les tubes-guides étant assez nombreux, il faudra prévoir un nombre suffisant de conduits fixes 18 qui seront par exemple écartés les uns des autres de 100 à 120 mm et placés en plusieurs nappes espacées par exemple de 350 mm.

Ainsi, grâce aux dispositions selon l'invention, il sera possible d'abaisser le niveau de la cuve d'une hauteur de l'ordre de un mètre ce qui représente une économie relativement importante.

Bien entendu, l'invention ne se limite pas aux détails du mode de réalisation qui vient d'être décrit à titre d'exemple mais elle englobe au contraire toutes les variantes et les autres dispositions que pourraient être obtenues par l'emploi de moyens équivalents.

**Revendications**

1. Installation de réacteur nucléaire dont le coeur est placé dans une cuve' entourée d'une-première enceinte de protection formant un puits et comportant des équipements de mesure et de contrôle disposé dans une salle placée du côté extérieur de la partie inférieure de la première enceinte et relié à des détecteurs susceptibles de se déplacer à l'intérieure et le long d'une pluralité de tubes-guides comportant une partie antérieure d'axe vertical, fermée à son extrémité, pénétrant verticalement à l'intérieur du coeur et reliée par une courbe à une partie postérieure traversant la première enceinte pour déboucher selon une direction sensiblement horizontale dans la salle des équipements de mesure placée du côté extérieur de la partie inférieure de la première enceinte, l'ensemble étant placé sur un radier plat constituant le fond d'une seconde enceinte de protection, caractérisée par le fait que la partie inférieure du puits limité par la première enceinte (2) et au moins la partie de la salle (8) des équipements de mesure dans laquelle débouchent les tubes-guides (11) sont placés

4

dans une cuvette (15) ménagée dans la partie centrale du radier (6), ladite cuvette ayant une profondeur inférieure à l'épaisseur de radier et un diamètre supérieur au diamètre extérieur de la première enceinte de protection.

2. Installation de réacteur nucléaire selon la revendication 1, dans lequel les tubes-guides (11) peuvent être déplacés par coulissement jusqu'à ce que leur partie antérieure (12) soit retirée du coeur, la partie postérieure (14) s'avançant d'une longueur correspondante vers l'intérieur de la salle des équipements de mesure, caractérisée par le fait que la salle (8) des équipements de mesure (7) comprend un plancher (80) placé au niveau supérieur du radier et dans lequel est ménagée, le long de la première enceinte, une fosse (16) correspondant à une partie de la cuvette extérieure au puits de la cuve et dans laquelle débouchent les tubes-guides (11), et que, dans le prolongement de la partie postérieure (14) de chaque tube, une pluralité de conduits cylindriques (18) sont ménagés dans le radier au-dessous de plancher, chaque conduit (18) étant disposé dans l'alignement de l'un des tubes-guides (11), la partie postérieure (14) de chaque tube-guide (11) pénétrant dans le conduit correspondant (18) lorsque ledit tube coulisse pour retirer du coeur la partie antérieure (12).

3. Installation de réacteur nucléaire selon la revendication 2, caractérisée par le fait que chaque conduit (18) est muni intérieurement d'un fourreau (19) de guidage du tube-guide (11).

4. Installation de réacteur nucléaire selon la revendication 3, caractérisée par le fait que chaque conduit (18) est muni à son extrémité la plus éloignée de la fosse, d'un organe de butée amovible (21) sur lequel peut venir s'appuyer la partie postérieure (14) du tube-guide (11) lorsque son extrémité antérieure (12) est soumise à une poussée hydraulique dans la cuve.

**Claims**

1. A nuclear reactor installation the core of which is placed in a vessel surrounded by a first protective enclosure forming a well and including equipments for measurement and control which are arranged in a room located outside the lower portion of the first enclosure and are connected to detectors capable of being moved inside and along a plurality of guide tubes which include a front portion of vertical axis which is closed at its end and penetrates vertically inside the core and is connected by a curve to a rear portion which passes through the first enclosure in order to emerge along a substantially horizontal direction into the room for the measuring equipments, which is located outside the lower portion of the first enclosure, the whole being placed upon a flat bed forming the bottom of a second protective enclosure, characterized by the fact that the lower portion of the well bounded by the first enclosure (2) and at least that portion of the room (8) for the measuring equipments, into which the guide tubes (11) emerge, are placed in a sump (15) arranged in the central portion of the bed (6), the said sump having a depth less than the thickness of the bed and a diameter greater than the outer diameter of the first protective enclosure.

2. A nuclear reactor installation as in Claim 1, in which the guide tubes (11) may be moved by sliding until the front portion (12) of them is withdrawn from the core, the rear portion (14) advancing by a corresponding length into the room for the measuring equipments, characterized by the fact that the room (8) for the measuring equipments (7) comprises a platform (80) which is located at the upper level of the bed and in which there is arranged along the first enclosure a trench (16) which corresponds with a portion of the sump outside the well for the vessel and into which emerge the guide tubes (11), and that in the prolongation of the rear portion (14) of each tube a plurality of cylindrical ducts (18) are arranged in the bed below the platform, each duct (18) being arranged in alignment with one of the guide tubes (11), the rear portion (14) of each guide tube (11) penetrating into the corresponding duct (18) when the said tubes slides in order to withdraw the front portion (12) from the core.

3. A nuclear reactor installation as in Claim 2, characterized by the fact that each duct (18) is equipped internally with a guide sheath (19) for the guide tube (11).

4. A nuclear reactor installation as in Claim 3, characterized by the fact that each duct (18) is equipped at the end of it furthest from the trench with a removable stop member (21) against which the rear portion (14) of the guide tube (11) may come to bear when the front end (12) of it is subjected to a hydraulic thrust in the vessel.

**Patentansprüche**

1. Kernreaktoranlage, dessen Kern in einem Druckbehälter (1) untergebracht ist, der von einer als Schacht ausgebildeten Reaktorabschirmung (2) umgeben ist, und die an der Aussenseite des unteren Teils (20) der Reaktorabschirmung (2) einen Raum (8) mit Meß- und Überwachungseinrichtungen (7) aufweist, an welche im Inneren und entlang mehrerer Führungsrohre (11) verschiebbare Detektoren angeschlossen sind, die ein senkrecht verlaufendes am Ende verschlossenses vorderes Teil (12) aufweisen, das senkrecht in das Kerninnere eindringt und über eine Krümmung (13) mit einem die Reaktorabschirmung (2) durchquerenden hinteren Teil (14) verbunden ist, um gemäß einer hauptsächlich horizontalen Ausrichtung in den an der Aussenseite des unteren Reaktorabschirmungsteiles (20) angeordneten Meßraum (8) zu münden, wobei die Anlage auf einer, die Sohle eines Containment-Gebäudes (5) bildenden flachen Grundplatte (6) angeordnet ist, dadurch gekennzeichnet, daß das untere Teil (20) des durch die Reaktorabschirmung (2) begrenzten Schachtes (3) und mindestens das Teil des Meßraumes (8), in welches die Führungsrohre (11) einmünden, in einer in der Mitte der Grundplatte (6) ausgebildeten Mulde (15) angeordnet sind, wobei die Muldentiefe ($h_2$) kleiner als die Dicke (e) der Grundplatte (6) und der Durchmesser ($d_2$) grösser als der Aussendurchmesser ($d_1$) der Reaktorabschirmung (2) sind.

2. Kernreaktoranlage gemäß Anspruch 1, in welcher die Führungsrohre (11) bis zur Herausnahme des vorderen Teils (12) aus dem Kern durch Gleiten verfahren werden können, wobei eine entsprechende Länge des hinteren Teils (14) in das Meßrauminnere eindringt, dadurch gekennzeichnet, daß der Raum (8) mit den Meßeinrichtungen (7) eine am oberen Niveau der Grundplatte (6) vorgesehene Decke (80) mit einer entlang der Reaktorabschirmung (2) angeordneten Grube (16) aufweist, die einem Teil der Mulde (15) ausserhalb des Druckbehälterschachtes (2) entspricht, in welche die Führungsrohre (11) münden, und daß eine Mehrzahl zylindrischer Leitungen (18) jeweils in der Fortsetzung des hinteren Teils (14) eines Führungsrohres (11) in der Grundplatte (6) unter der Decke (80) angeordnet sind, wobei jede Leitung (18) sich in der Fluchtlinie jeweils eines Führungsrohres (11) befindet, dessen hinteres Teil (14) in die zugehörige Leitung (18) eingeführt wird, wenn beim Herausziehen des vorderen Teils (12) aus dem Kern das Führungsrohr durch Gleiten vorschoben wird.

3. Kernreaktoranlage gemäß Anspruch 2, dadurch gekennzeichnet, daß im Inneren jeder Leitung (18) eine Führungshülse (19) des Führungsrohres (11) angeordnet ist.

4. Kernreaktoranlage gemäß Anspruch 3, dadurch gekennzeichnet, daß jede Leitung (18) an ihrem von der Grube entferntesten Ende ein beweglicher Anschlag (21) aufweist, an den das hintere Teil (14) des Führungsrohres (11) zur Auflage kommen kann, wenn das vordere Ende (12) einer hydraulischen Schubwirkung im Druckbehälter ausgesetzt ist.

Fig 1

Fig 2

7 21 18 19 9 17 16 14 13 10 11 17

8 2 20 12 1

80

$h_1$

0013210